# FASCICULE DE BREVET EUROPEEN

(11) **EP 1 468 029 B1**
(45) Date de publication et mention de la délivrance du brevet: **30.06.2010**
(21) Numéro de dépôt: 03712271.0
(22) Date de dépôt: 21.01.2003
(51) Int. Cl.: C08F 293/00, C08L 53/00, C08L 101/00

(54) **PROCEDE DE FABRICATION ET UTILISATION DE MATERIAUX RENFORCES AU CHOC CONTENANT DES COPOLYMERES BLOCS OBTENUS PAR POLYMERISATION RADICALAIRE CONTROLEE EN PRESENCE DE NITROXYDES**
VERFAHREN UND ANWENDUNG VON SCHLAGFESTIGKEITSMODIFIZIERTEN MATERIALIEN MIT BLOCKCOPOLYMEREN HERGESTELLT DURCH KONTROLLIERTE FREIRADIKALPOLYMERISATION IN ANWESENHEIT VON NITROXIDEN
METHOD OF PRODUCING AND USING MATERIALS WHICH ARE REINFORCED AGAINST IMPACT AND WHICH CONTAIN BLOCK COPOLYMERS THAT ARE OBTAINED BY MEANS OF CONTROLLED RADICAL POLYMERISATION IN THE PRESENCE OF NITROXIDES

(30) Priorité: 22.01.2002 FR 0200814; 13.02.2002 FR 0201765
(43) Date de publication de la demande: 20.10.2004
(73) Titulaire: ARKEMA FRANCE, 92700 Colombes (FR)
(72) Inventeur: RUZETTE-FOILLARD, Anne-Valérie, 75006 Paris (FR); CHAUVIN, Florence, King of Prussia, PA 19406-0936 (US); GUERRET, Olivier, F-69890 LA TOUR DE SALVAGNY (FR); BERTIN, Denis,, 13013 Marseille (FR); VUILLEMIN, Bruno, F-64230 Lescar (FR); LEIBLER, Ludwik, F-75016 Paris (FR); GERARD, Pierre, F-64230 Denguin (FR); EDERLE, Yannick, F-64140 Billere (FR)
(86) Numéro de dépôt international: PCT/FR2003/000186
(87) Numéro de publication internationale: WO 2003/062293

(56) Documents cités:
- EP-A- 0 947 527
- DE-A- 10 113 209
- FR-A- 2 807 439
- US-A- 4 581 429
- US-A- 5 686 534
- US-A- 5 763 548
- US-B1- 6 291 620

## Description

La présente invention se rapporte au domaine des matériaux renforcés aux chocs et particulièrement aux matériaux à la fois transparents et renforcés aux chocs et plus particulièrement aux matériaux renforcés aux chocs à l'aide d'un copolymère à blocs.

La présente invention décrit la préparation et la mise en oeuvre dans des matrices polymères fragiles thermoplastiques de copolymères à blocs obtenus par polymérisation radicalaire contrôlée en présence de nitroxydes stables. Les matériaux ainsi obtenus présentent des propriétés de résistance au choc améliorées.

Les résines thermoplastiques résistantes au choc sont obtenues de façon classique par mélange à chaud d'un additif renforçateur choc résultant des étapes de coagulation, déshydratation et séchage d'un latex élastomère, avec les particules de la résine thermoplastique ou polymère « dur », ce qui conduit à ce que l'on appelle un alliage à partir duquel on peut obtenir des articles façonnés par extrusion, injection, compression.

La demanderesse vient de trouver une nouvelle classe des matériaux polymères à la fois transparents et résistants aux chocs, ainsi qu'une nouvelle façon de préparer des matériaux polymères résistants aux chocs.

Le premier objet de la présente invention concerne des matériaux polymères transparents et résistants aux chocs constitués d'une matrice fragile (I), représentant de 10 à 85 % en poids.

Les matériaux de l'invention peuvent en outre contenir d'autres additifs renforçateurs aux chocs tels que ceux de la marque DurastrengthTM ou MetablendTm.
De manière générale la matrice fragile I présente une température de transition vitreuse (Tg) supérieure à 0°C. Parmi les matrices fragiles qu'il est important de renforcer aux chocs citons en particulier les matériaux à base de polyméthacrylate de méthyl, de polystyrène, de polyfluorure de vinylidène,de polyesters, de polycarbonate, de polychlorure de vinyl, de polyamide, de polyepoxyde, du polyethylène, du polyacrylonitrile, ou leurs copolymères.
De manière préférentielle la matrice fragile est un polyméthacrylate.

Les copolymères à blocs de l'invention répondent à la formule générale B-(A)n, n étant un entier naturel supérieur à deux de préférence compris entre 2 et 20 et de préférence entre 2 et 8;
où B représente un bloc de polymère constitué de l'enchaînement de motifs monomères polymérisables par voie radicalaire, dont la Tg globale est inférieure à 0°C. La masse molaire moyenne du bloc B est supérieure à 5000 g/mole, de préférence supérieure à 20000 g/mole et encore plus préférentiellement supérieure à 50000 g/mole.

A est un bloc de polymère constitué de l'enchaînement de motifs monomères polymérisables par voie radicalaire, dont la Tg globale est supérieure à 0°C. La masse molaire moyenne de chaque bloc A est comprise entre 10000 g/mol et 10⁶ g/mol, de préférence entre 10000 g/mol et 200000 g/mol et de préférence entre 20000 et 100000 g/mol

Les longueurs relatives des blocs A et B sont choisies telles que n*Mn(A)/(n*Mn(A)+Mn(B)) soit compris entre 0,5 et 0,95, de préférence entre 0,6 et 0,8 et tel que Mn(B) soit supérieure ou égale à la longueur d'enchevêtrement moyenne du bloc B.
Où Mn désigne la masse moléculaire moyenne en nombre du polymère.
Selon l'invention le copolymère à blocs (II) présente un indice de polydispersité compris entre 1.5 et 3, avantageusement compris entre 1,8 et 2,7 et de préférence compris entre 1.9 et2.5. En revanche le bloc B présente un indice de polydispersité inférieur à 2.

De manière générale A représente au moins 50 % en poids du poids total du copolymère (II) et de préférence entre 60 et 95%.

En particulier B est un polyacrylate de température de transition vitreuse inférieure à 0°C, de préférence B contiendra de motifs acrylate de butyle. A est un polymère compatible avec la matrice à renforcer. A titre indicatif pour renforcer le polyméthacrylate de méthyle (PMMA), le polyfluorure de vinylidène (PVDF) ou le polychlorure de vinyle (PVC° on choisira le PMMA pour A. Pour renforcer les polyesters tels que le polybutylène terephtalate ou le polyéthylène terephtalate, les époxy on choisira A de préférence parmi les polyméthacrylate contenant des motifs méthacrylate de glycydil ou acide méthacrylique et pour renforcer le polystyrène on choisira de préférence le PS pour A.

Un autre objet de l'invention est un procédé de préparation des matériaux transparents et résistants aux chocs de l'invention, ce procédé est fondé sur la technique de polymérisation dite "polymérisation radicalaire contrôlée" basée sur l'utilisation des nitroxydes stables. Le schéma général de synthèse est le suivant : on prépare dans un premier temps par polymérisation en présence d'un nitroxyde bien choisi le bloc B à caractère souple ou élastomère et dans un deuxième temps, en utilisant le bloc B comme amorçeur de polymérisation les branches A à caractère rigide ou thermoplastique.

Il est connu que des nitroxydes stables peuvent conduire à la formation par polymérisation radicalaire contrôlée de copolymères blocs (WO 9624620 ;WO 2000071501 A1 20001130, EP 1142913 A1 20011010). Grâce à certaines familles de nitroxydes décrits dans les brevets cités, des copolymères blocs incorporant des motifs aussi difficiles à contrôler par voie radicalaire classique que les acrylates sont décrits. Dans le cas des méthacrylates, il apparaît certaines limitations bien connues de l'homme de l'art telle que la réaction de transfert au nitroxyde (eq 1) qui induit une perte prématurée du contrôle des polymérisations :

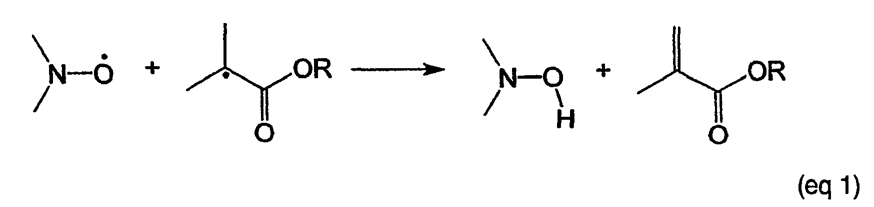

Cependant, à partir d'un premier bloc contrôlé par le nitroxyde, il est possible de réinitier une polymérisation radicalaire de méthacrylate qui sera limitée dans son caractère vivant mais n'en conduira pas moins à un copolymère bloc.

Les limitations du caractère vivant se traduisent par un élargissement de la polydispersité du bloc copolymère, comprise entre 1,5 et 2,5 et la demanderesse a découvert que cela avait une incidence sur la morphologie du copolymère à bloc.

En effet, des copolymères blocs monodispersés verront des transition de morphologie avoir lieu pour des compositions de bloc copolymère très précises (cf G. Holden & ai dans « Thermoplastic elastomers » 2"d edition, Carl Hanser Verlag, Munich,Vienna New York, 1996). De ce fait lorsque la proportion du bloc thermoplastique augmente, la morphologie évolue vers une topologie où la phase continue est la phase thermoplastique.
Tant que cette situation n'est pas atteinte, le copolymère bloc ne peut être mélangé de manière homogène à une matrice compatible avec le bloc thermoplastique. De ce fait le mélange devient opaque et les propriétés mécaniques en sont très faibles.

Comme la synthèse en deux étapes selon un quelconque procédé de polymérisation (masse, solvant, émulsion, suspensions) de bloc copolymères en présence de nitroxydes est très simple à mettre en oeuvre, il était essentiel de trouver les compositions ou les méthodes de synthèse conduisant à des copolymères compatibilisables avec des matrices thermoplastiques. La demanderesse a découvert que pour des compositions contenant entre 50 % et 95% de phase thermoplastique, de préférence entre 60 % et 85 % de phase thermoplastique, la morphologie des copolymères obtenus par polymérisation radicalaire contrôlée en présence de nitroxydes était compatible avec un bon amalgame du copolymère dans des matrices thermoplastiques fragiles.

De plus, à la différence du document JP2000198825 A 20000718 dans lequel les auteurs revendiquent l'utilisation de copolymères à blocs obtenus par polymérisation radicalaire contrôlée en présence de sel de cuivre, à faible indice de polydispersité (lp<1,5), la demanderesse a trouvé que grâce à la polymérisation radicalaire contrôlée en présence de nitroxyde, la polymérisation du bloc thermoplastique pouvait avoir lieu en même temps que la polymérisation de la matrice et qu'elle ne nécessitait pas d'isoler préalablement le copolymère bloc. Ainsi, à partir d'un premier bloc fonctionnalisé par des nitroxydes, il est possible d'initier des chaînes thermoplastiques en même temps que d'autres chaînes sont initiées par des amorceurs classiques ou par initiation thermique. Ceci présente deux avantages :
1°-Si la matrice thermoplastique à renforcer au choc est de même composition que le bloc thermoplastique du copolymère, on obtient directement le matériau renforcé.
2°-Si une autre matrice doit être renforcée le fait de rajouter des homopolymères au copolymère blocs permet de fluidifier le copolymère qui sinon présente une trop haute viscosité pour être transformé par extrusion sans subir de dégradation.

La Demanderesse revendique donc un procédé de fabrication de copolymères blocs compatibles avec des matrices thermoplastiques et la mise en oeuvre de ces copolymères blocs pour fabriquer ces résines plus résistantes à l'impact.

En particulier, le procédé selon l'invention consiste en la synthèse des copolymères en présence de nitroxydes III : 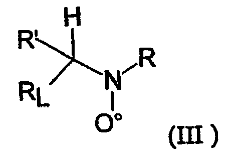
- où R' et R identiques ou différents, éventuellement reliés de manière à former un cycle sont des groupements alkyl possédant entre 1 et 40 atomes de carbone éventuellement substitué par des groupements hydroxy, alcoxy, amino, En particulier R et R' seront des groupements tert-butyl
- et où RL est un groupement monovalent de masse molaire supérieur à 16 g/mol, en particulier RL sera un groupement phosphoré et plus particulièrement un groupement phosphonate de formule :

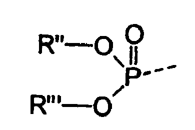

- où R" et R"' identiques ou différents, éventuellement reliés de manière à former un cycle sont des groupements alkyl possédant entre 1 et 40 atomes de carbone éventuellement substitué par des groupements hydroxy, alcoxy, amino. En particulier R " et R"' seront des groupements éthyl.

En particulier, les copolymères à blocs sont de formule générale B-(A)n où B représente un bloc du polymère constitué de l'enchaînement de motifs monomères polymérisables par voie radicalaire en présence de nitroxydes III et dont la Tg globale est inférieure à 0°C. La masse molaire moyenne du bloc B est comprise entre 3000 g/mol et 10⁶ g/mol, de préférence entre 5000 g/mol et 200000 g/mol et de préférence entre 5000 et 100000 g/mol ;

A est un bloc du polymère constitué de l'enchaînement de motifs monomères polymérisables par voie radicalaire en présence de nitroxydes III et dont la Tg globale est supérieure à 0°C. La masse molaire moyenne de chaque bloc A est comprise entre 10000 g/mol et 106 g/mol, de préférence entre 10000 g/mol et 200000 g/mol et de préférence entre 20000 et 100000 g/mol où n est un entier naturel supérieur à deux de préférence compris entre 2 et 20 et de préférence entre 2 et 8;

Les longueurs relatives des blocs A et B sont choisies telles que n*Mn(A)/(n*Mn(A)+Mn(B)) soit compris entre 0,5 et 0,95, de préférence entre 0,6 et 0,8 et tel que Mn(B) soit supérieure ou égale à la longueur d'enchevêtrement moyenne du bloc B. La polymémolécularité du copolymère bloc obtenu est comprise entre 1.5 et 3 de préférence entre 1.8 et 2.7 et encore préférentiellement de 1.9 à 2.5.

Le procédé est caractérisé en ce qu'il consiste :
1) Premièrement, à préparer selon une recette classique de polymérisation le premier bloc B en mélangeant au(x) monomère(s) une alcoxyamine de formule générale **(IV):** 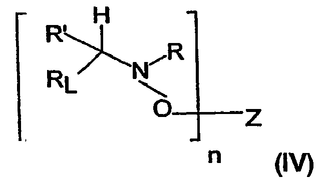 où Z est un radical multivalent porteur de fonctions terminales de type styryle ou acryle, les autres radicaux ayant les mêmes significations que ci dessus.
   en additionnant au mélange du nitroxyde III dans une proportion allant de 0 à 20 0/0 molaires par rapport aux moles de fonctions alcoxyamines (une alcoxyamine apporte n fonctions alcoxyamine).
   La polymérisation est effectuée à des températures allant de 60 à 250° C préférentiellement de 90 à 160° C, pour des pressions allant de 0,100 bar à 80 bars de préférence de 0,5 bar à 10 bars.
   La polymérisation doit être contrôlée, et on arrêtera celle ci de préférence avant 99 % de conversion. Préférentiellement avant 90 % de conversion. Le Bloc B ainsi obtenu est soit utilisé avec le résiduel de monomères soit purifié des monomères par distillation ou lavage et séchage avec un solvant non miscible avec B et miscible avec les monomères utilisés.
2) Deuxièmement, le procédé consiste à diluer le premier bloc B obtenu dans le mélange de monomères destinés à former les blocs A. A ce mélange on ajoute entre 0 et 100 équivalent molaire d'initiateur de polymérisation radicalaire classique (de type Luperoxil ou composé azoïque tel que l'AZDN7m).Le choix de ce ratio dépend du compromis viscosité/renforcement au choc que l'on souhaite avoir.
   La polymérisation est effectuée à des températures allant de 60 à 250°C préférentiellement de 90 à 160°C, pour des pressions allant de 0,100 bar à 80 bars de préférence de 0,5bar à 10 bars
   La conversion du monomère varie de 10 à 100 % et le polymère obtenu est séparé des monomères résiduels par évaporation sous vide à des températures allant jusqu'à 250°C et préférentiellement 200°C.
3) Troisièmement,
   - ou bien le matériau obtenu est extrudé en présence de la matrice fragile que l'on souhaite voir renforcée au choc : citons en particulier le PMMA, les polyesters de type PET, PBT, le polystyrène, le PVDF, les polyamides, les polycarbonates, le PVC .....Cette étape d'extrusion peut aussi faire intervenir d'autres additifs en particulier des additifs chocs tels que ceux de la marque DurastrengthT"' ou MetablendT"',
   - ou bien le matériau obtenu est dilué dans un mélange de monomères qui est lui-même polymérisé ensuite. Citons par exemple le styrène, le MAM, les époxydes, les mélanges de diols et de diacide, les précurseurs de polyamides (lactame ou les mélanges, diamine, diacides),
   - on peut aussi utiliser le matériau comme une résine résistante au choc sans mélange.

L'homme du métier sait choisir ses monomères en fonction du bloc souhaité. Parmi les monomères choisis, pur ou en mélange citons les monomères acryliques de formule générale : 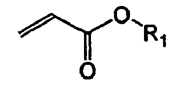 où R1 est un atome d'hydrogène, un alkyl contenant de 1 à 40 atome de carbone, linéaire, cycliqueou ramifié éventuellement substitué par un atome d'halogène, un groupement hydroxy (-OH), alcoxy, cyano, amino, epoxy,

Une autre famille de monomères de choix est constituée des monomères méthacryliques de formule générale : 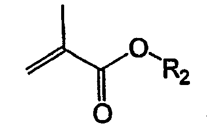 où R2 a la même signification que R1.

Un autre monomère possible est l'acrylonitrile, les dérivés styréniques, les diènes et de manière générale tout monomère porteur d'une liaison vinylique polymérisable par voie radicalaire.

Les matériaux de l'invention peuvent être utilisés dans divers domaines tels que l'industrie automobile, le bâtiment. Ils permettent de fabriquer des articles façonnés résistant au choc, en particulier des plaques, et tout particulièrement des plaques utiles pour former des articles thermoformés sanitaires, tels que baignoires, éviers, receveurs de douche, lavabos, cabines de douche, vasques, etc...

Ces articles façonnés présentent une résistance au choc améliorée tout en conservant de bonnes propriétés mécaniques, notamment en flexion (module élevé) c'est-à-dire une certaine rigidité.

Les exemples suivants illustrent l'invention sans en limiter la portée.

### Exemples :

Le radical libre stable utilisé dans les exemples et référencé SG1 correspond à la formule suivante :

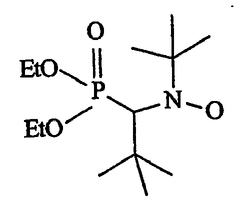

Les alcoxyamins DIAMS et TRIAMS cités dans les exemples correspondent aux formules suivantes :

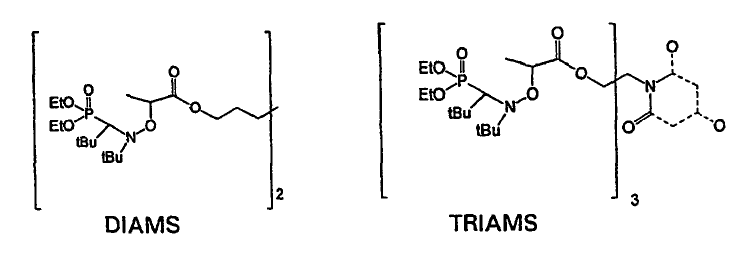

### I. Première série : Renforcement aux chocs d'une matrice PMMA par un copolymère B-(A)ₙ avec n= 2 ou 3

### I.1 Préparation des copolymères :

Ci-après est décrit un mode opératoire général de synthèses et de caractérisations.

Les synthèses sont réalisées en deux étapes dans un réacteur en acier d'une capacité utile de 9 litres. Les milieux initiaux sont systématiquement dégazés par des cycles vide-azote avant d'être introduits dans le réacteur, préchauffé à la température réactionnelle.

Le contrôle de la polymérisation de l'acrylate de butyle par exemple en présence des alcoxyamines 1 ou 2 désignés respectivement par DIAMS et TRIAMS a été optimisé à une température T=115°C et en présence d'un excès de SG1 libre de 7 % molaire par fonction alcoxyamine. Nous nous sommes limités à une conversion de 50 %, de façon à conserver un bon caractère vivant des macroamorceurs PABu-SG1 obtenus, le monomère résiduel étant ensuite éliminé par une étape de stripping (70°C sous vide pendant 2 heures)

Dans une deuxième étape, les macroamorceurs di ou trifonctionnels ainsi obtenus ont permis de réamorcer la polymérisation du MMA à 120°C sous pression, de façon à préparer des copolymères à blocs triséquencés et étoilés. Il est important de noter que la conversion en MMA est limitée à cause de réactions de dismutation entre le nitroxyde et les chaînes en croissance. A partir de la synthèse n°2, nous avons opté pour une montée en température par paliers entre 85 et 120°C, ce qui nous a permis de repousser cette limite de 20à45%.

Le tableau 1 (Tab 1) résume les conditions opératoires de synthèses du bloc B fonctionnalisé avec un radical libre stable le SG1. Le tableau 2 résume les conditions opératoires relatives à la préparation de 4 copolymères à blocs : polacrylate de butyle pour le bloc B et polyméthacrylate de méthyle pour le bloc A.

### 1.2 Préparation de la matrice renforcée :

Les mélanges constitués de PMMA et de copolymères renforcateurs aux chocs sont préparés par extrusion à l'état fondue.

### I.3 Caractérisations

Les masses molaires et leur distribution ont été déterminées par chromatographie d'exclusion stérique (CES), par calibration universelle utilisant des polystyrènes standard et les coefficients de Mark-Houwink du PABu pour les macroamorceurs PABu-SG1, et du PMMA pour les copolymères.

La composition des copolymères en PABu et PMMA a été déterminée par RMN du proton. Les résultats obtenus sont données dans le tableau 3 (Tab 3) en ce qui concerne le bloc B et dans le tableau 4 (Tab 4) en ce qui concerne les copolymères.

Les propriétés mécaniques ont été évaluées par le test bien connu de traction-élongation. Les résultats sont illustrés par la figure N° 1

### II. Deuxième série : Préparation in situ d'un PMMA renforcé aux chocs, par la polymérisation d'un mélange (sirop) méthacrylate de méthyle/ macroamorçeur à base d'Acrylate de butyle et de styrène soit par la technique dite plaque coulée soit en continu.

### II.1 Plaque coulée

### Etape 1 :

Préparation de copolymère acrylate de butyl/styrène (83/17) en polymérisant jusqu'à 69% un mélange contenant 7,2 kg d'acrylate de butyl, 800 g de styrène, 51 g de TRIAMS et 1,5g de SG1 libre. Le copolymère est récupéré par évaporation des volatils puis dissolution dans 8 kg de méthacrylate de méthyle.
Le macromamorçeur obtenu présente les caractéristiques suivantes : 17% en masse de styrène, Mn = 70000 g/mol, Mw = 142000 g/mol

### Etape 2 :

La formulation du sirop de méthacryalte de métyle employé est la suivante:
Une concertation variable de macroamorceur obtenu selon l'étape 1 : soit 2%, soit 5%, soit 7,5%, soit 10%, soit 20%.en poids du poids total du mélange.
550ppm de Luperox 331-80M.
0.2% en poids du poids total du mélange d'anhydride maléique.
21 ppm de gammaterpinène
Les plaques sont introduites en étuve, chauffées à 90°C pendant 16 heures environ et 2 heures en post-polymérisation à 125°C.
Ces exemples montrent (voir tableau 5, Tab5) que l'incorporation d'un copolymère bloc dans une matrice de PMMA de type plaque coulée apporte un renforcement au choc significatif supérieur à la meilleure référence commerciale actuelle.

Ils illustrent aussi le fait que les copolymères blocs obtenus grâce à la chimie des nitroxydes de l'invention peuvent être introduits in situ lors de la polymérisation de la matrice.

### II.2 Polymérisation en continu

On utilise dans cet exemple un montage constitué de deux réacteurs en cascade, l'un est maintenu à -40°C et sert à alimenter le second en sirop de polymérisation. Le second réacteur est le racteur de polymérisation à proprement dit. La température de polymérisation est supérieure à 160°C. On introduit le sirop de monomère dans le réacteur de polymérisation avec un débit de 8 kg/h. Dès qu'un taux de solide de l'ordre de 60% est obtenu le milieu de polymérisation est pompé en continu vers une extrudeuse dégazeuse à une température de 230°C. Le matériau est granulé après refroidissement dans un bac à eau.

Le sirop de monomère utilisé est le suivant (en proportion massique):
Polyacrylate de butyle, il s'agit du copolymère Flopil 9 décrit précédemment : 15% Acrylate d'éthyle : 0,6%
Diterdocdécyl disulfure 100 ppm
Dodécyl mercaptan 0,34%
Luperox 531 : 180 ppm
La température maximale de polymérisation atteinte est de 178°C
Les granulés obtenus ont pour composition finale :
82,5 %PMMA :
17,3% d'acrylate (de butyle et d'éthyle)
0,2% de MMA résiduel
Mn = 30000 g/mol (étalon PMMA)
Mw= 85000 g/mol (étalon PMMA)

Les mesures de la contrainte au seuil d'écoulement d'un PMMA standard, d'un PMMA renforcé aux chocs et du matériau préparé selon l'invention, réalisées par des essais de compression sur éprouvettes cylindriques suivant la norme ISO 604 ont permis de dégager les valeurs suivantes :
PMMA standard (MC31) : 130 MPa
PMMA renforcé aux chocs (produit commercial : le MI7T) : 98 MPa
PMMA renforcé selon l'invention : 96 MPa.

La comparaison des ces résultats montre que le produit selon l'invention a un comportement ductile équivalent à un grade choc standard de PMMA.

### ANNEXES

**Tableau 1 : Synthèse de macroamorceurs PABu-SG1**

| | DIAMS / TRIAMS* | | SG1 | | ABu | | Mn(th) |
|---|---|---|---|---|---|---|---|
| | m(g) | C(mol/l) | m(g) | C(mol/l) | m(g) | C(mol/l) | |
| PABuFLOPIL6 (DIAMS) | 59,7073 | 1,49.10⁻² | 3,1907 | 2,09.10⁻³ | 3600 | 6,98 | 60000 |
| PABuFLOPIL7 (DIAMS) | 58,0488 | 1,49.10⁻² | 2,7919 | 2,09.10⁻³ | 3500 | 6,98 | 60000 |
| PABuFLOPIL8 (DIAMS) | 54,0488 | 1,49.10⁻² | 2,7919 | 2,09.10⁻³ | 3500 | 6,98 | 60000 |
| PABuFLOPIL9 (TRIAMS) | 69,9200 | 0,99.10⁻² | 2,8716 | 2,09.10⁻³ | 3600 | 6,98 | 90000 |

**Tableau 2 : Synthèses des copolymères PABu-SG1**

| | PABu-SG1 | | MMA | | Ethylbenzène | | Mn(f=1) (PMMA) |
|---|---|---|---|---|---|---|---|
| | m(g) | C(mol/l) | m(g) | C(mol/l) | m(g) | C(mol/l) | |
| FLOPIL6 | 1800 | 9,81.10³ | 6250 | 7,16 | 1780 (20 %) | 1,92 | 73000 |
| FLOPIL7 | 1800 | 1,29.10⁻³ | 6420 | 8,21 | 830 (10 %) | 1,00 | 64000 |
| FLOPIL8 | 1100 | 5,31.10⁻³ | 6750 | 8,25 | 840 (10%) | 0,97 | 155200 |
| FLOPIL9 | 1100 | 3,23.10⁻³ | 6750 | 8,25 | 840 (10%) | 0,97 | 245500 |

**Tableau 3 : Caractéristiques des macroamorceurs**

| | Conversion Abu% | Mn(théorique) (g/mol) | Mn(SEC) (g/mol) | Mw(SEC) (g/mol) | IP |
|---|---|---|---|---|---|
| PABuFLOPIL6 | 35 | 21000 | 21000 | 31700 | 1,50 |
| PABuFLOPIL7 | 50 | 30000 | 17800 | 55400 | 3,11 |
| PABuFLOPIL8 | 47 | 28200 | 25300 | 35000 | 1,38 |
| PABuFLOPIL9 | 50 | 45000 | 28000 | 44000 | 1.57 |

**Tableau 4 : Caractéristiques des copolymères**

| | Conversion MMA% | Mn(th) (g/mol) | Mn(SEC) (g/mol) | Mw(SEC) (g/mol) | IP | % PMMA massique |
|---|---|---|---|---|---|---|
| FLOPIL6 | 20 | 35600 | 44900 | 124200 | 2,70 | 68 |
| FLOPIL7 | 35 | 40000 | 77400 | 170760 | 2,20 | 70 |
| FLOPIL8 | 44 | 93600 | 100200 | 240600 | 2,40 | 80 |
| FLOPIL9 | 40 | 138200 | 87230 | 245900 | 2,8 | 77 |

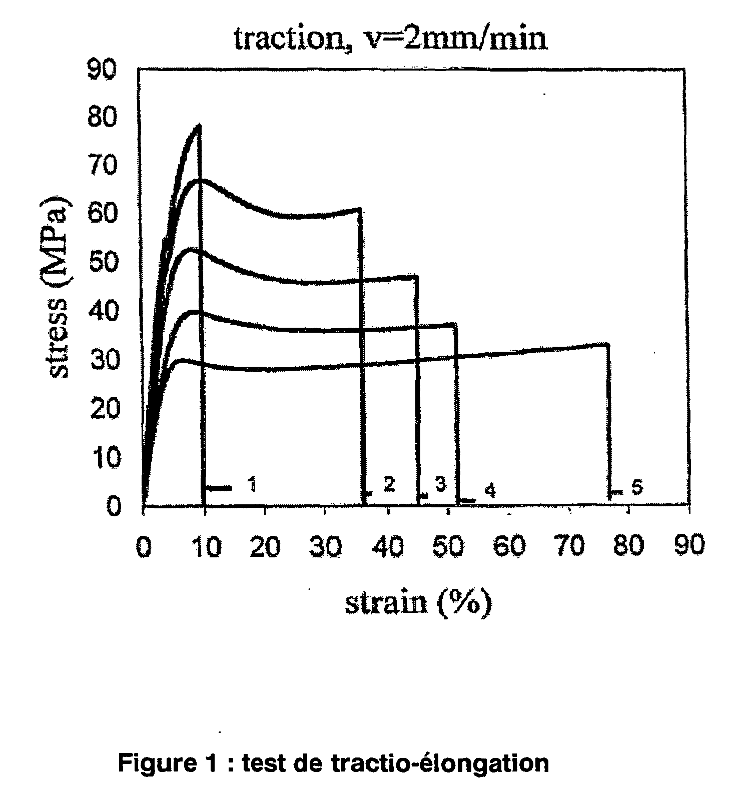

*Légende :*
(1) Noir V825 (matrice PMMA classique
(2) Bleu 25 % de Flopil 9
(3) Rouge 50 % de Flopil 9
(4) Vert 75 % de Flopil 9
(5) Rose 100 % de Flopil 9

**Tableau 5**

| A. **RESULTATS OBTENUS:** | | | | |
|---|---|---|---|---|
| Quantité de PABu | Aspect | Haze | MAM résiduel | Résilience* (en kJ.m²) |
| 2% | +++ | 1.18 | 3.65 % | 1.35 ± 0.06 |
| 5% | +++ | 1.59 | 3.32% | 1.78 ± 0.16 |
| 7.5% | +++ | 2.43 | 3.87% | 2.81 ± 0.18 |
| 10% | +++ | 3.52 | 3.45% | 3.62 ± 0.25 |
| 20% | +++ | 5.94 | 2.38% | 6.23 ± 0.25 |

| | | | | |
|---|---|---|---|---|
| +++: aucune fleur, pas de bulle, transluside, brillante, lisse. *: les résultats de choc ont été réalisés sur des éprouvettes entaillées avec un appareillage Charpy non instrumenté, un marteau de 1 Joule et à une vitesse de 2.9m.s⁻¹. Pour référence, il a été mesuré la résilience d'une plaque coulée non renforcée, et celle d'un grade choc commercial de plaque coulée qui valent respectivement 1.35 ± 0.03 kJ.mol-1 et 1.59 ± 0.03 kJ.mol-1. Figure 2 : | | | | |

## Revendications

1. Matériaux polymères transparents et résistants aux chocs constitués d'une matrice fragile (I) ayant une température de transition vitreuse supérieure à 0°C dans laquelle est dispersé un copolymère à blocs (II) de formule générale B-(A)n, n étant compris entre 2 et 20 de polydispersité comprise entre 1,5 et 3, B étant un bloc polymère à caractère souple de température de transition vitreuse inférieure à 0°C et d'indice de polydispersité inférieur à 2, et A est un bloc polymère à caractère rigide de température de transition vitreuse supérieure à 0°C, A étant de même nature ou compatible avec la matrice, **caractérisés en ce que** A représente de 50 à 95 % en poids du poids total du copolymère à bloc II.

2. Matériaux selon la revendication 1 **caractérisés en ce que** le copolymère à bloc a une polydispersité comprise entre 1,8 et 2,7 et de préférence comprise entre 2 et 2,5.

3. Matériaux selon l'une des revendications 1 ou 2 **caractérisés en ce que** la proportion de matrice fragile est comprise entre 10 et 85 %.

4. Matériaux selon l'une des revendications 1 à 3 **caractérisés en ce que** la matrice fragile est composée à plus de 50 % en poids d'au moins un polymère choisi dans le groupe contenant le polyméthacrylate de méthyl, le polystyrène, le polyfluorure de vinylidène, les polyesters, le polycarbonate, de polychlorure de vinyl, le polyamide, les polyepoxydes, le polyéthylène, le polyacrylonitrile, ou leurs copolymères.

5. Matériaux selon la revendication 4 **caractérisés en ce que** A représente de 60 à 90 % en poids du poids total du copolymère à bloc II.

6. Matériaux selon l'une des revendications précédentes **caractérisés en ce que** B est un polyacrylate de température de transition vitreuse inférieure à 0°C.

7. Matériaux selon l'une des revendications précédentes **caractérisés en ce que** A est un polyméthacrylate de température de transition vitreuse supérieure à 0°C.

8. Matériaux selon l'une des revendications précédentes **caractérisés en ce que** le bloc B présente une masse moyenne supérieure à 5000 g/mole, de préférence supérieure à 20000 et encore plus préférentiellement supérieure à 50000 g/mole.

9. Procédé de préparation des matériaux des revendications 1 à 8 consistant
1-Premièrement, à préparer selon une recette classique de polymérisation le premier bloc B en mélangeant au(x) monomère(s) une alcoxyamine de formule générale : 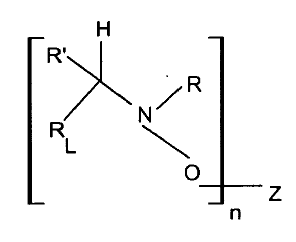
- où R' et R identiques ou différents, éventuellement reliés de manière à former un cycle sont des groupements alkyl possédant entre 1 et 40 atomes de carbone éventuellement substitué par des groupements hydroxy, alcoxy, amino. En particulier R et R' seront des groupements ter butyl
- où RL est un groupement monovalent de masse molaire supérieur à 16 g/mol, en particulier RL sera un groupement phosphoré et plus particulièrement un groupement phosphonate de formule : 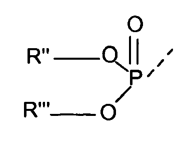
- où R" et R"' identiques ou différents, éventuellement reliés de manière à former un cycle sont des groupements alkyl possédant entre 1 et 40 atomes de carbone éventuellement substitué par des groupements hydroxy, alcoxy, amino. En particulier, R " et R"' seront des groupements éthyl.
où Z est un radical multivalent porteur de fonctions terminales de type styryle ou acryle, les autres radicaux ayant les mêmes significations que ci dessus.
La polymérisation est effectuée à des températures allant de 60 à 250° C préférentiellement de 90 à 160° C, pour des pressions allant de 0,100 bar à 80 bars de préférence de 0,5 bar à 10 bars.
2-Deuxièmement, à diluer le premier bloc B obtenu dans le mélange de monomères destinés à former les blocs A. A ce mélange on ajoute entre 0 et 100 équivalent molaire d'initiateur de polymérisation radicalaire classique (de type luperox^{™} ou composé azoïque tel que l'AZDN^{™}). Le choix de ce ratio dépend du compromis viscosité/renforcement au choc que l'on souhaite avoir.
La polymérisation est effectuée à des températures allant de 60 à 250°C préférentiellement de 90 à 160°C, pour des pressions allant de 0,100 bar à 80 bars de préférence de 0,5 bar à 10 bars.
La conversion du monomère varie de 10 à 100 % et le polymère obtenu est séparé des monomères résiduels par évaporation sous vide à des températures allant jusqu'à 250°C et préférentiellement 200°C.

10. Procédé de préparation des matériaux selon la revendication 9 consistant en :
1-Premièrement, à préparer selon une recette classique de polymérisation le premier bloc B en mélangeant au(x) monomère(s) une alcoxyamine de formule générale : 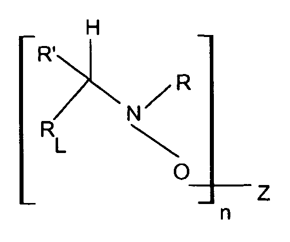
- où R' et R identiques ou différents, éventuellement reliés de manière à former un cycle sont des groupements alkyl possédant entre 1 et 40 atomes de carbone éventuellement substitué par des groupements hydroxy, alcoxy, amino. En particulier R " et R"' seront des groupements ter butyl.
- et où RL est un groupement monovalent de masse molaire supérieur à 16 g/mol. En particulier RL sera un groupement phosphoré et plus particulièrement un groupement phosphonate de formule : 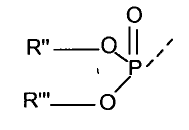
- où R" et R"' identiques ou différents, éventuellement reliés de manière à former un cycle sont des groupement alkyl possédant entre 1 et 40 atomes de carbone éventuellement substitué par des groupements hydroxy, alcoxy, amino. En particulier R " et R"' seront des groupements éthyl.
où Z est un radical multivalent porteur de fonctions terminales de type, les autres radicaux ayant les mêmes significations que ci dessus.
La polymérisation est effectuée à des températures allant de 60 à 250° C préférentiellement de 90 à 160° C, pour des pressions allant de 0,100 bar à 80 bars de préférence de 0,5 bar à 10 bars.
2-Deuxièmement, à diluer le premier bloc B obtenu dans le mélange de monomères destinés à former les blocs A. A ce mélange on ajoute entre 0 et 100 équivalent molaire d'initiateur de polymérisation radicalaire classique (de type LuperoxTM ou composé azoïque tel que l'AZDNTI). Le choix de ce ratio dépend du compromis viscosité/renforcement au choc que l'on souhaite avoir.
La polymérisation est effectuée à des températures allant de 60 à 250°C préférentiellement de 90 à 160°C, pour des pressions allant de 0,100 bar à 80 bars de préférence de 0,5 bar à 10 bars.
La conversion du monomère varie de 10 à 100 % et le polymère obtenu est séparé des monomères résiduels par évaporation sous vide à des températures allant jusqu'à 250°C et préférentiellement 200°C.
3-Troisièmement, à mélanger selon les techniques connus le produit obtenu en 2 et la matrice fragile que l'on souhaite voir renforcée au choc telle que le PMMA, les polyesters de type PET, PBT, le polystyrène, le PVDF, les polyamides, les polycarbonates, le PVC, éventuellement en présence d'autres additifs en particulier des additifs chocs tels que ceux de la marque DurastrengthT^{™} ou MetablendT^{™}.

11. Procédé de préparation des matériaux selon la revendication 9 consistant en :
1-Premièrement, à préparer selon une recette classique de polymérisation le premier bloc B en mélangeant au(x) monomère(s) une alcoxyamine de formule générale : 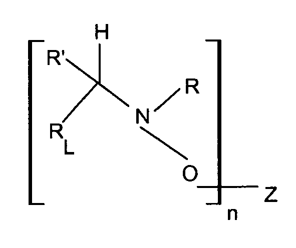
- où R' et R identiques ou différents, éventuellement reliés de manière à former un cycle sont des groupements alkyl possédant entre 1 et 40 atomes de carbone éventuellement substitué par des groupements hydroxy, alcoxy, amino. En particulier R et R' seront des groupements ter butyl
- et où RL est un groupement monovalent de masse molaire supérieur à 16 g/mol, en particulier RL sera un groupement phosphoré et plus particulièrement un groupement phosphonate de formule : 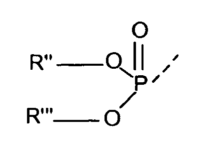
- où R" et R"' identiques ou différents, éventuellement reliés de manière à former un cycle sont des groupements alkyl possédant entre 1 et 40 atomes de carbone éventuellement substitué par des groupements hydroxy, alcoxy, amino. En particulier R " et R"' seront des groupements éthyl.
où Z est un radical multivalent porteur de fonctions terminales de type, les autres radicaux ayant les mêmes significations que ci dessus.
La polymérisation est effectuée à des températures allant de 60 à 250°C préférentiellement de 90 à 160°C, pour des pressions allant de 0,100 bar à 80 bars de préférence de 0,5 bar à 10 bars.
2-Deuxièmement, à diluer le premier bloc B obtenu dans le mélange de monomères destinés à former les blocs A. A ce mélange on ajoute entre 0 et 100 équivalent molaire d'initiateur de polymérisation radicalaire classique (de type Luperox^{™} ou composé azoïque tel que l'AZDNT^{™}). Le choix de ce ratio dépend du compromis viscosité/renforcement au choc que l'on souhaite avoir.
La polymérisation est effectuée à des températures allant de 60 à 250°C préférentiellement de 90 à 160°C, pour des pressions allant de 0,100 bar à 80 bars de préférence de 0,5 bar à 10 bars.
La conversion du monomère varie de 10 à 100 % et le polymère obtenu est séparé des monomères résiduels par évaporation sous vide à des températures allant jusqu'à 250°C et préférentiellement 200°C. 3-Troisièmement à diluer le produit obtenu en 2 dans un mélange de monomères choisis parmi le styrène, le MAM, les époxydes, les mélanges de diols et de diacide, les précurseurs de polyamides (lactame ou les mélanges, diamine, diacides) et à polymériser l'ensemble comme décrit en 2.

12. Procédé suivant l'une des revendications 9 à 11 **caractérisé en ce que** l'alcoxyamine utilisée correspond à la formule suivante :

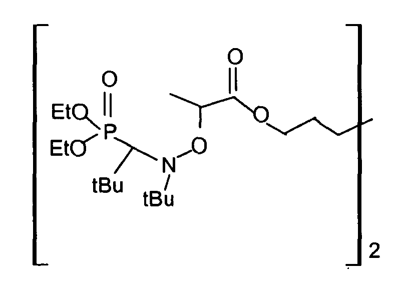

13. Procédé suivant l'une des revendications 9 à 11 **caractérisé en ce que** l'alxoxyamine utilisée correspond à la formule suivante

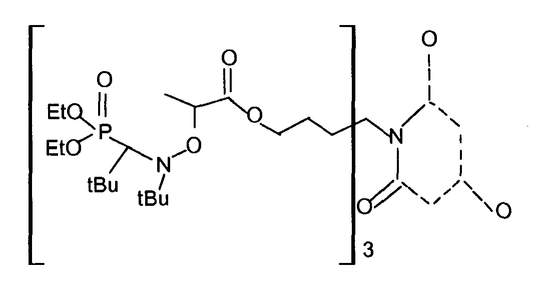

## Claims

1. Transparent and impact-resistant polymer materials composed of a brittle matrix (I) having a glass transition temperature of greater than 0°C in which is dispersed a block copolymer (II) of general formula B-(A)ₙ, n being between 2 and 20, with a polydispersity of between 1.5 and 3, B being a polymer block with a flexible nature with a glass transition temperature of less than 0°C and with a polydispersity index of less than 2 and A being a polymer block with a stiff nature with a glass transition temperature of greater than 0°C, A being of the same nature as or compatible with the matrix, **characterized in that** A represents from 50 to 95% by weight of the total weight of the block copolymer (II).

2. Materials according to Claim 1, **characterized in that** the block copolymer has a polydispersity of between 1.8 and 2.7 and preferably of between 2 and 2.5.

3. Materials according to either of Claims 1 and 2, **characterized in that** the proportion of brittle matrix is between 10 and 85%.

4. Materials according to one of Claims 1 to 3, **characterized in that** the stiff matrix is composed to greater than 50% by weight of at least one polymer chosen from the group consisting of poly(methyl methacrylate), polystyrene, poly(vinylidene fluoride), polyesters, polycarbonate, poly(vinyl chloride), polyamide, polyepoxides, polyethylene, polyacrylonitrile and their copolymers.

5. Materials according to Claim 4, **characterized in that** A represents from 60 to 90% by weight of the total weight of the block copolymer (II).

6. Materials according to one of the preceding claims, **characterized in that** B is a polyacrylate with a glass transition temperature of less than 0°C.

7. Materials according to one of the preceding claims, **characterized in that** A is a polymethacrylate with a glass transition temperature of greater than 0°C.

8. Materials according to one of the preceding claims, **characterized in that** the block B exhibits an average molar mass of greater than 5000 g/mol, preferably of greater than 20 000 and more preferably still of greater than 50 000 g/mol.

9. Process for the preparation of the materials of Claims 1 to 8, consisting
1 Firstly, in preparing, according to a conventional polymerization recipe, the first block B by mixing the monomer(s) with an alkoxyamine of general formula: 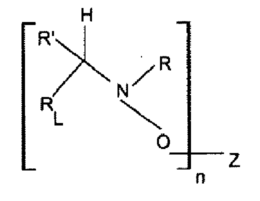
- where R' and R, which are identical or different, optionally connected so as to form a ring, are alkyl groups having between 1 and 40 carbon atoms optionally substituted by hydroxyl, alkoxy or amino groups; in particular, R and R' will be tert-butyl groups;
- and where R_{L} is a monovalent group with a molar mass of greater than 16 g/mol; in particular, R_{L} will be a phosphorus group and more particularly a phosphonate group of formula: 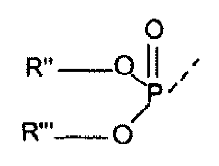
- where R" and R'", which are identical or different, optionally connected so as to form a ring, are alkyl groups having between 1 and 40 carbon atoms optionally substituted by hydroxyl, alkoxy or amino groups; in particular R" and R'" will be ethyl groups,
where Z is a polyvalent radical carrying end functional groups of styryl or acryloyl type, the other radicals having the same meanings as above.
The polymerization is carried out at temperatures ranging from 60 to 250°C, preferably from 90 to 160°C, for pressures ranging from 0.100 bar to 80 bar, preferably from 0.5 bar to 10 bar.
2 Secondly, in diluting the first block B obtained in the mixture of monomers intended to form the blocks A. Between 0 and 100 molar equivalents of conventional radical polymerization initiator (of the Luperox^{™} or azo compound type, for example AZDN^{™}) are added to this mixture. The choice of this ratio depends on the viscosity/impact-reinforcing compromise which it is desired to have.
The polymerization is carried out at temperatures ranging from 60 to 250°C, preferably from 90 to 160°C, for pressures ranging from 0.100 bar to 80 bar, preferably from 0.5 bar to 10 bar.
The conversion of the monomer varies from 10 to 100% and the polymer obtained is separated from the residual monomers by evaporation under vacuum at temperatures ranging up to 250°C and preferably 200°C.

10. Process for the preparation of the materials according to Claim 9, consisting
1 - Firstly, in preparing, according to a conventional polymerization recipe, the first block B by mixing the monomer(s) with an alkoxyamine of general formula: 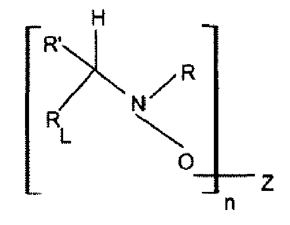
- where R' and R, which are identical or different, optionally connected so as to form a ring, are alkyl groups having between 1 and 40 carbon atoms optionally substituted by hydroxyl, alkoxy or amino groups; in particular, R and R' will be tert-butyl groups;
- and where R_{L} is a monovalent group with a molar mass of greater than 16 g/mol; in particular, R_{L} will be a phosphorus group and more particularly a phosphonate group of formula: 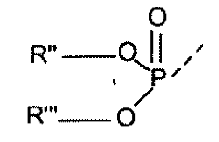
- where R" and R"', which are identical or different, optionally connected so as to form a ring, are alkyl groups having between 1 and 40 carbon atoms optionally substituted by hydroxyl, alkoxy or amino groups; in particular R" and R'" will be ethyl groups,
where Z is a polyvalent radical carrying end functional groups of styryl or acryloyl type, the other radicals having the same meanings as above.
The polymerization is carried out at temperatures ranging from 60 to 250°C, preferably from 90 to 160°C, for pressures ranging from 0.100 bar to 80 bar, preferably from 0.5 bar to 10 bar.
2 - Secondly, in diluting the first block B obtained in the mixture of monomers intended to form the blocks A. Between 0 and 100 molar equivalents of conventional radical polymerization initiator (of the Luperox^{™} or azo compound type, for example AZDN^{™}) are added to this mixture. The choice of this ratio depends on the viscosity/impact-reinforcing compromise which it is desired to have.
The polymerization is carried out at temperatures ranging from 60 to 250°C, preferably from 90 to 160°C, for pressures ranging from 0.100 bar to 80 bar, preferably from 0.5 bar to 10 bar.
The conversion of the monomer varies from 10 to 100% and the polymer obtained is separated from the residual monomers by evaporation under vacuum at temperatures ranging up to 250°C and preferably 200°C.
3 - Thirdly, in mixing, according to known techniques, the product obtained in 2 and the brittle matrix which it is desired to see reinforced against impact, such as PMMA, polyesters of PET or PBT type, polystyrene, PVDF, polyamides, polycarbonates or PVC, optionally in the presence of other additives, in particular impact additives, such as those of the Durastrength^{™} or Metablend^{™} trade mark.

11. Process for the preparation of the materials according to Claim 9, consisting
1 - Firstly, in preparing, according to a conventional polymerization recipe, the first block B by mixing the monomer(s) with an alkoxyamine of general formula: 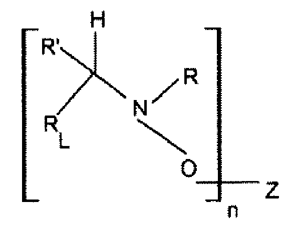
- where R' and R, which are identical or different, optionally connected so as to form a ring, are alkyl groups having between 1 and 40 carbon atoms optionally substituted by hydroxyl, alkoxy or amino groups; in particular, R and R' will be tert-butyl groups;
- and where R_{L} is a monovalent group with a molar mass of greater than 16 g/mol; in particular, R_{L} will be a phosphorus group and more particularly a phosphonate group of formula: 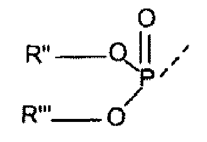
- where R" and R'", which are identical or different, optionally connected so as to form a ring, are alkyl groups having between 1 and 40 carbon atoms optionally substituted by hydroxyl, alkoxy or amino groups; in particular R" and R'" will be ethyl groups,
where Z is a polyvalent radical carrying end functional groups of styryl or acryloyl type, the other radicals having the same meanings as above.
The polymerization is carried out at temperatures ranging from 60 to 250°C, preferably from 90 to 160°C, for pressures ranging from 0.100 bar to 80 bar, preferably from 0.5 bar to 10 bar.
2 - Secondly, in diluting the first block B obtained in the mixture of monomers intended to form the blocks A. Between 0 and 100 molar equivalents of conventional radical polymerization initiator (of the Luperox^{™} or azo compound type, for example AZDN^{™}) are added to this mixture. The choice of this ratio depends on the viscosity/impact-reinforcing compromise which it is desired to have.
The polymerization is carried out at temperatures ranging from 60 to 250°C, preferably from 90 to 160°C, for pressures ranging from 0.100 bar to 80 bar, preferably from 0.5 bar to 10 bar.
The conversion of the monomer varies from 10 to 100% and the polymer obtained is separated from the residual monomers by evaporation under vacuum at temperatures ranging up to 250°C and preferably 200°C.
3 - Thirdly, in diluting the product obtained in 2 in a mixture of monomers chosen from styrene, MMA, epoxides, mixtures of diols and of diacid, or precursors of polyamides (lactam or mixtures, diamine, diacids), and in polymerizing the combination as described in 2.

12. Process according to one of Claims 9 to 11, **characterized in that** the alkoxyamine used corresponds to the following formula:

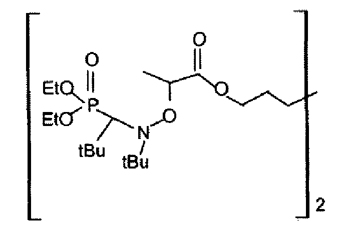

13. Process according to one of Claims 9 to 11, **characterized in that** the alkoxyamine used corresponds to the following formula:

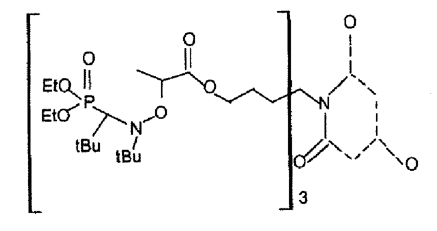

## Patentansprüche

1. Transparente und schlagzähe Polymermaterialien aus einer spröden Matrix (I) mit einer Glasübergangstemperatur von mehr als 0°C, in der ein Blockcopolymer (II) der allgemeinen Formel B-(A)n dispergiert ist, wobei n zwischen 2 und 20 liegt und die Polydispersität zwischen 1,5 und 3 liegt und es sich bei B um ein flexibles Blockpolymer mit einer Glasübergangstemperatur von weniger als 0°C und einem Polydispersitätsindex von weniger als 2 handelt und es sich bei A um ein steifes Blockpolymer mit einer Glasübergangstemperatur von mehr als 0°C handelt, wobei A die gleiche Beschaffenheit wie die Matrix aufweist oder damit verträglich ist, **dadurch gekennzeichnet, daß** A 50 bis 95 Gew.-% des Gesamtgewichts des Blockcopolymers II ausmacht.

2. Materialien nach Anspruch 1, **dadurch gekennzeichnet, daß** das Blockcopolymer eine Polydispersität zwischen 1,8 und 2,7 und vorzugsweise zwischen 2 und 2,5 aufweist.

3. Materialien nach einem der Ansprüche 1 oder 2, **dadurch gekennzeichnet, daß** der Anteil der spröden Matrix zwischen 10 und 85% liegt.

4. Materialien nach einem der Ansprüche 1 bis 3, **dadurch gekennzeichnet, daß** die spröde Matrix zu mehr als 50 Gew.-% aus mindestens einem Polymer aus der Gruppe bestehend aus Polymethylmethacrylat, Polystyrol, Polyvinylidenfluorid, Polyestern, Polycarbonat, Polyvinylchlorid, Polyamid, Polyepoxiden, Polyethylen, Polyacrylnitril und Copolymeren davon besteht.

5. Materialien nach Anspruch 4, **dadurch gekennzeichnet, daß** A 60 bis 90 Gew.-% des Gesamtgewichts des Blockcopolymers II ausmacht.

6. Materialien nach einem der vorhergehenden Ansprüche, **dadurch gekennzeichnet, daß** es sich bei B um ein Polyacrylat mit einer Glasübergangstemperatur von weniger als 0°C handelt.

7. Materialien nach einem der vorhergehenden Ansprüche, **dadurch gekennzeichnet, daß** es sich bei A um ein Polymethacrylat mit einer Glasübergangstemperatur von mehr als 0°C handelt.

8. Materialien nach einem der vorhergehenden Ansprüche, **dadurch gekennzeichnet, daß** der Block B eine mittlere Molmasse von mehr als 5000 g/mol, vorzugsweise mehr als 20.000 g/mol und noch weiter bevorzugt mehr als 50.000 g/mol aufweist.

9. Verfahren zur Herstellung von Materialien gemäß den Ansprüchen 1 bis 8, bei dem man
1 - zunächst gemäß einer herkömmlichen Polymerisationsvorschrift den ersten Block B herstellt, indem man das Monomer bzw. die Monomere mit einem Alkoxyamin der allgemeinen Formel: 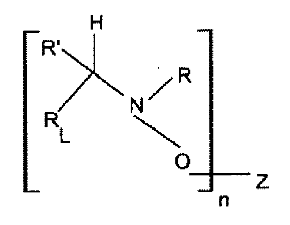
- worin R' und R gleich oder verschieden sind, gegebenenfalls zu einem Ring verbunden sind und für Alkylgruppen mit 1 bis 40 Kohlenstoffatomen, die gegebenenfalls durch Hydroxy-, Alkoxy-, Aminogruppen substituiert sind, und insbesondere für tert.-Butylgruppen stehen;
- worin R_{L} für eine einwertige Gruppe mit einer Molmasse von mehr als 16 g/mol und insbesondere für eine phosphorhaltige Gruppe und noch spezieller eine Phosphonatgruppe der Formel: 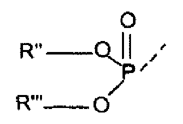
- worin R" und R'" gleich oder verschieden sind, gegebenenfalls zu einem Ring verbunden sind und für Alkylgruppen mit 1 bis 40 Kohlenstoffatomen, die gegebenenfalls durch Hydroxy-, Alkoxy-, Aminogruppen substituiert sind, und insbesondere für Ethylgruppen stehen; steht;
- worin Z für einen mehrwertigen Rest mit endständigen Funktionen vom Styryl- oder Acryltyp steht, wobei die anderen Reste die oben angegebene Bedeutung besitzen,
mischt;
die Polymerisation erfolgt bei Temperaturen im Bereich von 60 bis 250°C, vorzugsweise 90 bis 160°C, für Drücke im Bereich von 0,100 bar bis 80 bar, vorzugsweise 0,5 bar bis 10 bar;
2 - zweitens den erhaltenen ersten Block B in der Mischung der zur Bildung der Blöcke A vorgesehenen Monomere verdünnt; diese Mischung wird mit zwischen 0 und 100 Moläquivalenten eines herkömmlichen Radikalpolymerisationsinitiators (vom Luperox^{™}-Typ oder Azoverbindungstyp wie AZDN^{™}) versetzt; die Wahl dieses Verhältnisses hängt von dem gewünschten Kompromiß von Viskosität und Schlagzähigkeit ab;
die Polymerisation erfolgt bei Temperaturen im Bereich von 60 bis 250°C, vorzugsweise 90 bis 160°C, für Drücke im Bereich von 0,100 bar bis 80 bar, vorzugsweise 0,5 bar bis 10 bar;
der Monomerenumsatz variiert von 10 bis 100%, und das erhaltene Polymer wird durch Abdampfen unter Vakuum bei Temperaturen bis zu 250°C und vorzugsweise 200°C von den Restmonomeren befreit.

10. Verfahren zur Herstellung von Materialien nach Anspruch 9, bei dem man:
1 - zunächst gemäß einer herkömmlichen Polymerisationsvorschrift den ersten Block B herstellt, indem man das Monomer bzw. die Monomere mit einem Alkoxyamin der allgemeinen Formel: 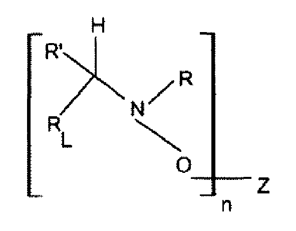
- worin R' und R gleich oder verschieden sind, gegebenenfalls zu einem Ring verbunden sind und für Alkylgruppen mit 1 bis 40 Kohlenstoffatomen, die gegebenenfalls durch Hydroxy-, Alkoxy-, Aminogruppen substituiert sind, und insbesondere für tert.-Butylgruppen stehen;
- worin R_{L} für eine einwertige Gruppe mit einer Molmasse von mehr als 16 g/mol und insbesondere für eine phosphorhaltige Gruppe und noch spezieller eine Phosphonatgruppe der Formel: 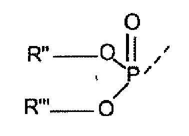
- worin R" und R'" gleich oder verschieden sind, gegebenenfalls zu einem Ring verbunden sind und für Alkylgruppen mit 1 bis 40 Kohlenstoffatomen, die gegebenenfalls durch Hydroxy-, Alkoxy-, Aminogruppen substituiert sind, und insbesondere für Ethylgruppen stehen; steht;
- worin Z für einen mehrwertigen Rest mit endständigen Funktionen vom Styryl- oder Acryltyp steht, wobei die anderen Reste die oben angegebene Bedeutung besitzen,
mischt;
die Polymerisation erfolgt bei Temperaturen im Bereich von 60 bis 250°C, vorzugsweise 90 bis 160°C, für Drücke im Bereich von 0,100 bar bis 80 bar, vorzugsweise 0,5 bar bis 10 bar;
2 - zweitens den erhaltenen ersten Block B in der Mischung der zur Bildung der Blöcke A vorgesehenen Monomere verdünnt; diese Mischung wird mit zwischen 0 und 100 Moläquivalenten eines herkömmlichen Radikalpolymerisationsinitiators (vom Luperox^{™}-Typ oder Azoverbindungstyp wie AZDNTI) versetzt; die Wahl dieses Verhältnisses hängt von dem gewünschten Kompromiß von Viskosität und Schlagzähigkeit ab;
die Polymerisation erfolgt bei Temperaturen im Bereich von 60 bis 250°C, vorzugsweise 90 bis 160°C, für Drücke im Bereich von 0,100 bar bis 80 bar, vorzugsweise 0,5 bar bis 10 bar;
der Monomerenumsatz variiert von 10 bis 100%, und das erhaltene Polymer wird durch Abdampfen unter Vakuum bei Temperaturen bis zu 250°C und vorzugsweise 200°C von den Restmonomeren befreit;
3 - drittens das in 2 erhaltene Produkt und die spröde Matrix, die schlagzäh gemacht werden soll, wie PMMA, Polyester vom PET- oder PBT-Typ, Polystyrol, PVDF, Polyamide, Polycarbonate, PVC, gegebenenfalls in Gegenwart von anderen Additiven, insbesondere Schlagzähigkeitsadditiven wie denjenigen mit dem Warenzeichen Durastrength^{™} oder Metablend^{™} nach bekannten Techniken mischt.

11. Verfahren zur Herstellung von Materialien nach Anspruch 9, bei dem man:
1 - zunächst gemäß einer herkömmlichen Polymerisationsvorschrift den ersten Block B herstellt, indem man das Monomer bzw. die Monomere mit einem Alkoxyamin der allgemeinen Formel: 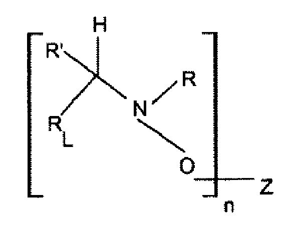
- worin R' und R gleich oder verschieden sind, gegebenenfalls zu einem Ring verbunden sind und für Alkylgruppen mit 1 bis 40 Kohlenstoffatomen, die gegebenenfalls durch Hydroxy-, Alkoxy-, Aminogruppen substituiert sind, und insbesondere für tert.-Butylgruppen stehen;
- worin R_{L} für eine einwertige Gruppe mit einer Molmasse von mehr als 16 g/mol und insbesondere für eine phosphorhaltige Gruppe und noch spezieller eine Phosphonatgruppe der Formel: 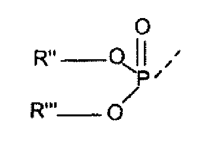
- worin R" und R'" gleich oder verschieden sind, gegebenenfalls zu einem Ring verbunden sind und für Alkylgruppen mit 1 bis 40 Kohlenstoffatomen, die gegebenenfalls durch Hydroxy-, Alkoxy-, Aminogruppen substituiert sind, und insbesondere für Ethylgruppen stehen; steht;
- worin Z für einen mehrwertigen Rest mit endständigen Funktionen vom Typ steht, wobei die anderen Reste die oben angegebene Bedeutung besitzen,
mischt;
die Polymerisation erfolgt bei Temperaturen im Bereich von 60 bis 250°C, vorzugsweise 90 bis 160°C, für Drücke im Bereich von 0,100 bar bis 80 bar, vorzugsweise 0,5 bar bis 10 bar;
2 - zweitens den erhaltenen ersten Block B in der Mischung der zur Bildung der Blöcke A vorgesehenen Monomere verdünnt; diese Mischung wird mit zwischen 0 und 100 Moläquivalenten eines herkömmlichen Radikalpolymerisationsinitiators (vom Luperox^{™}-Typ oder Azoverbindungstyp wie AZDNT^{™}) versetzt; die Wahl dieses Verhältnisses hängt von dem gewünschten Kompromiß von Viskosität und Schlagzähigkeit ab;
die Polymerisation erfolgt bei Temperaturen im Bereich von 60 bis 250°C, vorzugsweise 90 bis 160°C, für Drücke im Bereich von 0,100 bar bis 80 bar, vorzugsweise 0,5 bar bis 10 bar;
der Monomerenumsatz variiert von 10 bis 100%, und das erhaltene Polymer wird durch Abdampfen unter Vakuum bei Temperaturen bis zu 250°C und vorzugsweise 200°C von den Restmonomeren befreit;
3 - drittens das in 2 erhaltene Produkt in einer Mischung von Monomeren, die unter Styrol, MAM, Epoxiden, Mischungen von Diolen und Disäure, Polyamidvorläufern (Lactamen oder Mischungen, Diamin, Disäuren) ausgewählt werden, mischt und das Ganze wie in 2 beschrieben polymerisiert.

12. Verfahren nach einem der Ansprüche 9 bis 11, **dadurch gekennzeichnet, daß** das verwendete Alkoxyamin der folgenden Formel entspricht:

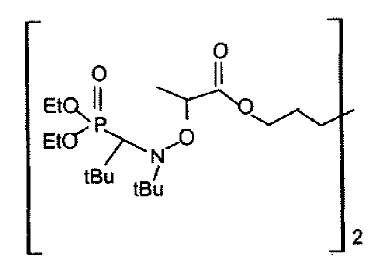

13. Verfahren nach einem der Ansprüche 9 bis 11, **dadurch gekennzeichnet, daß** das verwendete Alkoxyamin der folgenden Formel entspricht:
